Europäisches Patentamt

European Patent Office

Office européen des brevets

(19)

(11) Publication number: **0 254 257**
**A2**

## EUROPEAN PATENT APPLICATION

(21) Application number: **87110491.5**

(22) Date of filing: **20.07.87**

(51) Int. Cl.4: **A01N 41/08** , **A01N 43/80** , **A01N 61/00**

(30) Priority: **23.07.86 US 888614**

(43) Date of publication of application:
**27.01.88 Bulletin  88/04**

(84) Designated Contracting States:
**AT BE CH DE ES FR GB GR IT LI LU NL SE**

(71) Applicant: **S.C. JOHNSON & SON, INC.**
**1525 Howe Street**
**Racine, Wisconsin 53403(US)**

(72) Inventor: **Harris, Robert B.**
**3515 Indiana Street**
**Racine Wisconsin 53405(US)**

(74) Representative: **Baillie, Iain Cameron et al**
**c/o Ladas & Parry Isartorplatz 5**
**D-8000 München 2(DE)**

(54) Insect bait composition.

(57) The present invention provides for an insect bait composition characterized by (a) an insecticide present in effective amounts; (b) a non-caloric sweetener in amounts sufficient to attract insects; and (c) an aqueous carrier in amount sufficient to bind the composition and to permit ready insect ingestion. The present composition is particularly effective against social insects, especially ants. Additional ingredients include thickeners, gellants, binders and amino acids, the latter enhancing the appealability of the food attractant to the insect.

EP 0 254 257 A2

This invention relates to an insecticidal bait composition. More particularly, it relates to an insect bait composition, which is effective in controlling social insects, especially ants, and comprises an insecticide, a non-caloric sweetener as the food attractant, and an aqueous carrier.

Insect bait compositions are desirable methods of insect control because they can be designed to be specific to target insects, with little, if any, environmental contamination or mortality in beneficial insects or animals. For insects such as roaches or flies, the bait must be sufficiently attractive to cause the insects to feed. Since such insects are not selective in their feeding habits, i.e., they ingest whatever is available, the composition of the insect bait has not proven particularly critical and a quick-acting toxicant is usually preferred.

Social insects, on the other hand, present special problems for toxic bait compositions. Social insects, such as ants, yellow jackets and wasps, live in colonies, which depend on foraging worker insects to find a food source and to transport it back to the colony to nourish the young brood and reproductive adults. Accordingly, toxic bait compositions can be utilized to control these social insects provided sufficient numbers of the insect population ingest sufficient amounts of the toxic bait. In practical terms, this means getting the target insect to the bait, having an acceptable bait which the target insect will feed on, and having a non-repellent, slow-acting toxicant, which will not diminish bait acceptance but, in the case of social insects, will act slowly enough to allow the foraging workers to transfer food to the brood and adults back at the colony.

Foraging insects, especially ants, are considered good targets for toxic bait compositions because their behavior makes traditional methods difficult to apply as ant colonies are often hidden or located outside the home and cannot be treated. Because of the social nature of ants, only one ant needs to find the bait composition, since that one ant will recruit additional ants to the bait composition and thereby deliver larger quantities of the toxic composition to the colony than would otherwise be possible with solitary or non-social insects.

Foraging insects, especially ants, are very sensitive to foreign materials in their food. Many of the available and effective, slow-acting toxicants are, in general, somewhat repellent to insects. Accordingly, until now, it has proven difficult to develop a bait composition containing effective, slow-acting toxicants, which is at least as attractive to insects as the large variety and quantity of competing foods in the natural environment. This problem is compounded by the difficulty of luring insects away from these competing food sources, once a suitable food source has been established. Therefore, an appropriate bait composition base may be the most important aspect of a successful bait composition as it acts both as a food attractant and a mask for repellent toxic insecticides.

It has been proposed to provide insect baits which employ caloric or nutritive sweeteners as the attractant, as in U.S. Patent Nos. 4,386,071 and 4,049,460, and as found in several commercially-available formulations. However, nutritive sweeteners; such as glucose, sucrose, brown sugar, dextrose, fructose and the like, have not proven sufficiently attractive over competing natural food sources. Certain natural sweeteners, such as honey, can compete well with natural food sources, but are prohibitively expensive and very inconvenient to process and use as the base of a bait composition.

Several commercial formulations containing various sugars and other foodstuffs as the food attractant are presently available. Current liquid baits contain various sugar/carbohydrate solutions, along with sodium borate or boric acid as the toxicant. Solid-type baits are somewhat more complex. For example, one commercial formulation contains corn syrup, corn meal, and grease, along with amidino hydrazone as the toxicant. None of these commercial insecticidal bait compositions, however, contain a non-caloric sweetener, such as saccharin or cyclamate, as the food attractant.

U.S. Patent No. 4.279,895 to Carle discloses an insecticidal bait composition based on diatomaceous silica and a sugar or a sugar substitute. The sharp edges of the small particle sizes of the diatomaceous silica injure the insect which thereafter rapidly dies. The only sugar disclosed is an invert sugar sold under the trademark LUMOLININE. Non-nutritive sweeteners are neither disclosed nor contemplated. In fact, the Carle system works in a completely different manner than the present invention as foraging workers would not be able to carry Carle's bait composition back to the colony. Its effectiveness, due to the sharp, killing edges of the diatomaceous silica, is limited to localized applications.

U.S. patent No. 4,386,071 also to Carle is similar to the above-mentioned insecticidal bait composition except a wider variety of sugars, including invert sugar, honey, glucose, icing sugar, sucrose and dextrose, are disclosed. All are, caloric or nutritive sweeteners. In the Carle '895 and '071 patents, the term "sugar substitute" is employed. However, there is no disclosure or suggestion for the use of non-nutritive sweeteners.

U.S. Patent No. 4,049,460 to Broadbent discloses an insecticidal roach bait composition containing a non-repellent binder (wax), a food material selected from dry dog food, maltose and brown sugar, and the insecticide, Dursban. There is no disclosure or suggestion for using a non-nutritive sweetener as a food attractant, nor is there any recognition of the effectiveness of a non-nutritive sweetener when used in combination with insecticides normally considered repellent to social insects, especially ants.

U.S. Patent No. 4,581,378 discloses a rodenticide composition containing rodenticide, artificial sweetener, 70 to 95 weight percent of an inert edible carrier and 1 to 10 weight percent of vegetable oil. The application states that the success of a rodenticide is to a large extent a function of the animal's acceptability of the product, with a rodent's acceptability of the product related to the taste the rodent (rat) has for the product. Insects, on the other hand, generally rely on chemical stimuli, rather than on a developed sense of taste. Additionally, there is no reference to, or suggestion that, artificial sweeteners would be effective in insecticidal bait compositions.

Y. Hseun et al., "Preliminary Tests on the Use of Saccharin Liquid Baits in the Control of Rice Grain Storehouse Rodents," Plant Prot. Bull. (Taiwan) 20: 171-174 (1978), discloses the use of saccharin in rodent baits. Since sugar solutions were said to attract vast numbers of undesirable ants, which are a nuisance in storehouses and act to hasten decomposition of the rodent bait, the authors tested saccharin and found it suitable for rodent baits. Saccharin was specifically found to be unattractive to ants. It was this unattractiveness of saccharin to ants which provided the impetus for its use with rodents.

Accordingly, the object of the present invention is to provide an economical insecticidal bait composition, which is effective in controlling the population of insect colonies fed by foragers, and more attractive to insects than conventional insect bait compositions containing natural carbohydrate sweeteners.

The present invention provides for an insect bait composition characterized by (a) an insecticide present in effective amounts; (b) a non-caloric sweetener in amounts sufficient to attract insects; and (c) an aqueous carrier in amounts sufficient to bind the composition and to permit ready insect ingestion.

It has been unexpectedly found that the non-caloric sweeteners, saccharin and cyclamate, are especially effective as food attractants in insecticidal bait compositions, particularly when used as bait for social insects, especially ants. Since social insects are generally more sensitive to the presence of toxicants, these non-caloric sweeteners additionally permit the use of certain insecticides that are generally considered somewhat repellent to social insects, especially ants. For example, ants do not normally feed on the insecticide, bendiocarb, 2,2-dimethyl-1,3-benzodioxyl-4-yl-N-methylcarbamate (sold as FICAM$_{TM}$ ), even when it is combined with nutritive carbohydrate sugars, but readily feed on bait compositions of the present invention containing that toxicant and a non-caloric sweetener.

It has additionally been unexpectedly found that the presence of non-caloric sweeteners have allowed the use of toxicants that are unattractive to, and hence would otherwise repel, ants in the food source. One such toxicant which has generally been considered unattractive to ants up until now is bendiocarb.

A preferred embodiment of the present insecticidal bait composition is characterized by an insecticide, a non-caloric sweetener, and an aqueous carrier comprising a thickening or gelling ingredient to impart cohesiveness or gel-like properties to the bait composition in order that the desired shape may be formed and maintained. Additionally, the bait compositions may optionally contain a binder or filler ingredient to increase the bulk of the bait composition.

Another preferred bait composition contains various amino acids, in particular, L-proline, leucine, L-phenylalanine, and others, which have appealability as food attractants and therefore can be used to enhance the appealability of these non-caloric sweeteners to attract and target insects, particularly social insects such as ants, and thereby increase consumption rates.

The insecticides or toxic materials that may be utilized in accordance with the teachings of this invention are those considered effective against the particular insect targeted. In some cases, insecticides that were previously considered unattractive to social insects, particularly ants, can be utilized with greater effectiveness. In addition, it is preferred to utilize insecticides which are slow-acting toxicants, in order to allow time for the toxicant-containing composition to be brought back to the nest by the foraging workers and distributed among the insect colony.

For non-social insects, such as roaches, a quick-acting poison is preferable because roaches do not demonstrate a preference for food materials, i.e., they ingest whatever is available. While the compositions of this invention are not limited to use with social insects, that is the preferred use.

Examples of insecticides that can effectively be used in the compositions of this invention are bendiocarb, borate or boric acid, growth regulators (such as methoprene), nematode parasites, pyrethroids, pyrethrum, chorpyrifos and various mixtures thereof. The more preferred insecticides are bendiocarb and borate or boric acid.

Boric acid and sodium borate act as general poisons upon ingestion into the insect's gut and, in general, act much slower than synthetic insecticidal materials. Bendiocarb works to inhibit the nervous system impulses by interruption of cholinesterase formation.

Pyrethroids are synthetic compounds that duplicate or improve upon the biological activity of the active principles of the pyrethrum plant. Examples of commercial pyrethroids include permethrin, resmethrin and cypermethrin. Pyrethroids generally give longer residual activity than natural pyrethrum.

Pyrethrum is a botanically derived insecticide which utilizes the active principle of various esters of pyrethrolone, chrysanthmic acid and pyrethoic acid. The activity of this material can be made more effective by using the well documented synergistic action of piperonyl butoxide in combination with the pyrethrum.

The concentration of the insecticides of the invention is not critical. The lower limit is defined by that amount required to form an effective dosage, and the upper limit, by economic considerations. The amount of insecticide employed will vary depending on the type of insecticide and the additional ingredients of the bait composition. The concentration of insecticide can preferably be from about 0.001% to about 10%, based on the total weight of the insect bait composition. The preferred ranges of these insecticides, when used to control ant colonies, are as follows:

| Insecticide | Amount (from about % to about %) |
|---|---|
| bendiocarb (FICAM$_{TM}$) | 0.01-1 |
| pyrethrum | 0.01-1 |
| pyrethroids | 0.01-0.5 |
| chorpyrifos | 0.01-2 |
| boric acid or borate | 0.01-10 |
| growth regulators (methoprene) | 0.01-1 |
| nematode parasites | 0.01-5 |

Unless otherwise indicated, all percentages of ingredients are calculated as weight percentages based upon the total weight of the insect bait composition.

Other insecticides, especially those well known in the art and useful for such purposes, can also be readily utilized.

The non-caloric or non-nutritive sweeteners include saccharin (ortho-benzosulfimide), its derivatives, and its sodium, ammonium, and other cationic forms, and cyclamate (n-cyclohexylsulfamate), and its sodium, calcium, and other cationic forms. Other such sweeteners include dihydrochalcones; such as naringin and neohesperidine dihydrochalcone and glysodic compounds; such as stevioside, osladin and glycyrrhizin.

The non-caloric sweeteners are generally present in amounts sufficient to attract insects and mask repellent insecticides. Accordingly, these non-caloric sweeteners may be present in amounts from about 0.01% to about 10%, based on the total weight of the insect bait composition. The preferred non-caloric sweeteners are sodium cyclamate and sodium saccharide and are employed in preferred amounts from about 0.1 to about 2%.

Sufficient aqueous carrier is usually present to bind the formulation and to enable it to be ingested by the insect. The preferred aqueous carrier consists of water, in amounts of from about 1 to 99.9%, based on the total weight of the insect bait composition, with from about 80 to 98% water being preferred.

The aqueous carrier may additionally contain various thickening or gelling ingredients. Those used in accordance with this invention are well known in the art and individual ingredients are typically selected from the broad classes of materials useful for this purpose. All aid in modifying the viscosity or consistency of the bait composition. The thickening or gelling ingredients include, but are not limited to, sodium alginate, hydroxyethyl cellulose, seaweed extracts, and mixtures thereof. These thickener ingredients act to increase the viscosity, or in some cases, gel, the bait composition. The preferred gelling ingredient is sodium alginate, which, if used in sufficient quantity, provides the toxicant with an encapsulated coating. The gel or encapsulated form is preferred and offers the advantages described herein. These ingredients can be present in amounts up to about 10%, based on the total weight of the insect bait composition, with concentrations from about 0.01% to about 2% being preferred.

The optional filler or binder ingredient acts to create bulk in the composition. Such ingredients include gums; such as gum arabic, guar gum and locust bean gum, starches; such as corn starch, resins; grease and cellulosic polymers; such as carboxymethylcellulose, methylcellulose and hydroxyethyl cellulose. The filler ingredients may be present in concentrations up to about 99%, based on the total weight of the insect bait composition, with concentrations between 0.1 and 20% being generally preferred.

Various amino acids have been surprisingly found to have appealability as food attractants and therefore can be used to enhance the appealability of the non-caloric sweeteners. These amino acids Include L-proline, leucine, L-phenylalanine, aspartic acid, glycine, valine, L-ornithine, servine, and mixtures thereof, with leucine being particularly preferred. They may be present in concentrations from about 0.001% to about 2%, based on the total weight of the insect bait composition, although the concentration is not critical. A concentration from about 0.1 to about 0.5% is preferred. ·

Caloric sweeteners may optionally be used in combination with non-caloric sweeteners. These caloric sweeteners include various carbohydrate sugars; such as sucrose. fructose, honey, dextrose, and the like, and mixtures thereof. If employed, they may be present in concentrations from about 0.01% to about 80%, based on the total weight of the insect bait composition, with concentrations of about 2% to about 10% being preferred.

The bait compositions of this invention may optionally contain antimicrobial preservatives; such as the parabens and sorbates, in amounts effective to preserve the bait composition from microbial degradation.

The liquid or semi-liquid baits are prepared by hydrating the thickening or binding ingredient, such as the starch or gum ingredient. After hydration has occurred, the artificial sweetener, toxicant and other optional ingredients are added and mixed to uniformity.

The gel-like or encapsulated baits are prepared by adding the gelling ingredient, e.g., sodium alginate, to water and mixing until hydrated. The artificial sweetener is then added and mixed in, followed by the toxicant and any other optional ingredients that may be added. Upon completion of mixing, the above solution is exposed, usually by dipping, to a solution of calcium chloride (usually about 10-20%) and allowed to stand for 5 to 35 minutes. The resulting encapsulated gels are then rinsed in clear water. The encapsulated gels should be sealed prior to use to prevent evaporation of water. The gel or encapsulated formulation is preferred as the gel form suppresses water loss by evaporation. and may lessen the repellency of the toxicant. It is also a form that the foraging worker can conveniently bring back to the colony.

Certain preferred embodiments are further illustrated in the following illustrative examples.


EXAMPLE 1


In order to illustrate the enhanced results obtained from the present invention, a series of feeding preference tests were conducted to show the superior insect attraction power of the non-caloric sweeteners as described in accordance with this invention.

These tests were carried out in the following manner on colonies of Pharaoh ants kept in plastic containers. The containers were coated with Teflon to prevent escape of the ants, and contained two ant nests.

A lined, 3 × 5 index card was folded in half, lines on the outside, and a triangular notch, 1.5 mm deep and 3 mm wide at the base, was cut into the fold at each line. The card was placed in the ant nest container on top of one nest. A space in front of the card was wiped clean, and one, 10 VWR microliter pipet was filled for each treatment liquid tested.

Pipets were filled one at a time with a treatment chosen at random. Excess material was wiped from the outside of the pipet which was then placed in the next notch of the card at approximately a 60 degree angle. Treatments included a distilled water standard which was expected to give low removal rates, and a 10% honey standard for higher removal rates. Treatments were placed in different random order in each of 8 Pharaoh ant nest containers and also in a container with teflon and nests, but no ants. The antless container served as an evaporation control. Treatments were entered one nest container at a time with the order of nest containers, including the antless one, chosen at random. Each nest container had one of each treatment.

Pipets were left in the ant nest container for 1 to 3 hours depending on the density of ants in the nests being used. At the end of the incubation period, pipets were removed one at a time in the order in which they were entered and the amount of liquid removed from the pipets was measured to the nearest 0.5 mm.

Removal data were converted to microliters removed per hour. To do this the amount of evaporation (as measured by amount removed in the antless container) was subtracted from each treatment. Then the resulting length in centimeters was multiplied by 10 and divided by 5.1 (the length of the pipet containing 10 microliters). The resulting volume was divided by the time of incubation (in hours).

The above-described test method proved to be a fast, sensitive method for determining ant preferences of liquid, aqueous-based baits.

The insect attractant was prepared by mixing the stated amount of sodium saccharin in water and its effectiveness was measured by comparing its feeding preferences as exhibited by Pharaoh ants with distilled water, a 10% fructose composition and a 10% honey solution according to the test procedure recited above. The results are given in Table 1 below.

## TABLE 1

| Treatment[1] | Consumption Rate[2] |
|---|---|
| 1% NaS, 99% $H_2O$ | 3.10 |
| 2% NaS, 98% $H_2O$ | 2.98 |
| 0.1% NaS, 99.9% $H_2O$ | 2.49 |
| 100% $H_2O$ | 2.03 |
| 10% honey, 90% $H_2O$ | 1.99 |
| 10% Fr, 90% $H_2O$ | 1.58 |
| 0.01% NaS, 99.99% $H_2O$ | 1.40 |

[1] NaS = sodium saccharin, Fr = fructose (Corn Sweet 90-a trade name material).

[2] The mean of eight separate runs (in microliters removed per hour).

These tests generally show the enhanced attractiveness of non-caloric sweeteners to insects. They do not measure the ability of the sweeteners to mask repellent toxicants. As will be shown hereafter, even smaller amounts of non-caloric sweeteners will prove to be more attractive than caloric sweeteners when toxicants are additionally present.

The consumption rates in Table 1 indicate that the Pharaoh ants consumed significantly more of the sample formulas containing between 0.1 and 2% sodium saccharin than the 10% honey treatment, with the 1% sodium saccharin formula being preferred. In another test, a 10% honey formula was found superior to a 1% sodium saccharin formula, and the 1% sodium saccharin formula was not significantly different from a 10% fructose formula. Both tests were conducted in the absence of a toxicant in the bait, however. Accordingly, overall, the tests demonstrate that consumption rates for compositions containing the non-caloric sweetener, sodium saccharin, compare favorably with compositions containing caloric sweeteners.

## EXAMPLE 2

An insect attractant was prepared as shown in Table 1, except sodium cyclamate was substituted for sodium saccharin. The feeding preferences as exhibited by Pharaoh ants were again compared with distilled water, a 10% fructose solution and 10% honey solution as in Example 1. The results are given in Table 2 below.

6

## TABLE 2

| Treatment[1]/ | Consumption Rate[2]/ |
|---|---|
| 10% honey, 90% $H_2O$ | 2.18 |
| 1% NaCy, 99% $H_2O$ | 1.99 |
| 0.1% NaCy, 99.9% $H_2O$ | 1.51 |
| 100% water | 1.34 |
| 0.01% NaCy, 99.99% $H_2O$ | 1.24 |
| 2% NaCy, 98% $H_2O$ | 1.00 |
| 10% Fr, 90% $H_2O$ | 0.98 |

[1]/ NaCy = sodium cyclamate, Fr = fructose (Corn Sweet 90-a trade name material).

[2]/ The mean of eight separate runs (in microliters removed per hour).

The consumption rates shown in Table 2 indicate that the 0.1% and 1% sodium cyclamate formulas compared favorably with the 10% honey formula, i.e., their differences were not significant. The honey formula, however, would be expensive and difficult to formulate, and the 100% water formula would not mask the repellent toxicant. Therefore, the sodium cyclamate formulas are preferred. In another test, a 10% honey formula was found superior to a 1% sodium cyclamate formula, and the 1% sodium cyclamate formula was not significantly different from a 10% fructose formula. However, tests with a toxicant present showed that artificial sweeteners were preferred. Accordingly, these tests demonstrate that consumption rates for compositions containing the non-caloric sweetener, sodium cyclamate, compare favorably with compositions containing caloric sweeteners.

In order for an insect bait composition to work, it must be consumed by the insect and compete well with alternative food sources available to the target insect. Both saccharin and cyclamate demonstrate these capabilities. Additionally, the dipeptide of asparatic acid and L-phenylalanine, aspartame (hereinafter referred to as an amino acid) at 1% concentration in water, compared favorably with 1% sodium saccharin and sodium cyclamate solutions in the above-referenced feeding studies, i.e., ants readily fed on all three baits.

## EXAMPLE 3

Test compositions were prepared by mixing 9% fructose with the various amounts of sodium saccharin and water and comparing their feeding preferences as exhibited by Pharaoh ants with distilled water, a 10% honey formula, a 1% sodium saccharin formula, and a 9% fructose formula according to the test procedure of Example 1. The results of the tests are shown in Table 3:

## TABLE 3

| Treatment[1] | Consumption Rate[2] |
|---|---|
| 1% NaS, 9% Fr, 90% $H_2O$ | 4.58 |
| 0.5% NaS, 9% Fr, 90.5% $H_2O$ | 4.03 |
| 1% NaS, 99% $H_2O$ | 3.75 |
| 0.1% NaS, 9% Fr, 90.9% $H_2O$ | 3.35 |
| 0.01% NaS, 9% Fr, 90.99% $H_2O$ | 3.00 |
| 9% Fr, 91% $H_2O$ | 2.49 |
| 10% honey, 90% $H_2O$ | 2.43 |
| 100% $H_2O$ | 2.37 |

[1] NaS = sodium saccharin, Fr = fructose (Corn Sweet 90).
[2] The mean of 7 separate runs (in microliters removed per hour).

The consumption rates shown in Table 3 indicate that the addition of 9% fructose enhanced somewhat the attractiveness of the 1% sodium saccharin formula. This formula and the 0.5% sodium saccharin formula containing 9% fructose gave superior consumption rates comparted with a 9% fructose formula and a 10% honey formula.

EXAMPLE 4

Test bait formulations were prepared by mixing 5% glucose with sodium saccharin and water in various ratios and comparing their feeding preferences as exhibited by Pharaoh ants with distilled water, a 10% honey formula, a 1% sodium saccharin formula, and a 5% glucose formula in accordance with the test procedure of Example 1. The results are illustrated in Table 4.

## TABLE 4

| Treatment[1] | Consumption Rate[2] |
|---|---|
| 1% NaS, 99% $H_2O$ | 6.07 |
| 1% NaS, 5% Gl, 94% $H_2O$ | 5.69 |
| 0.5% NaS, 5% Gl, 94.5% $H_2O$ | 5.53 |
| 0.1% NaS, 5% Gl, 94.9% $H_2O$ | 3.97 |
| 0.01% NaS, 5% Gl, 94.99% $H_2O$ | 3.84 |
| 5% Gl, 95% $H_2O$ | 3.70 |
| 100% $H_2O$ | 3.12 |
| 10% honey, 90% $H_2O$ | 2.67 |

[1] NaS = sodium saccharin, Gl = glucose (Casco 1632 — a trade name material).
[2] The mean of eight separate runs (in microliters removed per hour).

The consumption rates shown in Table 4 indicate that at least those formulas containing 0.5% and 1% sodium saccharin and 5% glucose were superior to the 5% glucose and 10% honey formulations.

EXAMPLE 5

The formulations shown in Table 5 were prepared by mixing 1% sodium saccharin with honey and water in various ratios and comparing the feeding preferences as exhibited by Pharaoh ants with distilled water, and a 10% honey formula, and a 1% sodium saccharin formula in accordance with the test procedure of Example 1.

### TABLE 5

| Treatment[1] | Consumption Rate[2] |
|---|---|
| 1% NaS, 0.1% H, 98.9% $H_2O$ | 5.81 |
| 1% NaS, 99% $H_2O$ | 5.81 |
| 1% NaS, 1% H, 98% $H_2O$ | 5.73 |
| 1% NaS, 10% H, 89% $H_2O$ | 5.63 |
| 1% NaS, 5% H, 94% $H_2O$ | 5.30 |
| 10% H, 90% $H_2O$ | 4.64 |
| 100% $H_2O$ | 4.35 |

[1] NaS = Sodium saccharin, H = honey.
[2] The mean of 7 separate runs (in microliters removed per hour).

The consumption rates shown in Table 5 indicate that formulas containing different ratios of sodium saccharin and honey are at least equally preferred, if not superior, to those containing just honey.

EXAMPLE 6

The test results shown in Table 6 were conducted in the same manner as described in Example 1 above except they were presented to the Pharaoh ants using 20 microliter pipettes for four hours because of the thick sample consistency. These compositions also contained insecticides, either sodium borate or bendiocarb (FICAM_{TM}).

### TABLE 6

| Treatment[1] | Consumption Rate[2] |
|---|---|
| 1 | 0.756 |
| 2 | 0.718 |
| 3 | 0.709 |
| 4 | 0.504 |
| 5 | 0.397 |
| 6 | 0.313 |
| 7 | 0.266 |

[1] Formulas 1-7 are described below.
[2] The mean of 8 separate runs (in microliters removed per hour).

Formula 1 contained 7.7% sodium borate, 1% sodium saccharin, 9% fructose (Corn Sweet 90), 1% sodium alginate (Kelgin HV), 0.1% Kathon CG (an antimicrobial agent), and the remainder, water.

Formula 2 contained 0.01% FICAM$_{TM}$, 1% sodium saccharin, 1% sodium alginate (Kelgin HV), 0.25% yeast extract, 0.01% Kathon CG, and the remainder, water.

Formula 3 was the same as Formula 1, but without the antimicrobial agent, Kathon CG.

Formula 4 was the same as Formula 1, except the sodium alginate is Kelgin LV instead of Kelgin HV.

Formula 5 contained 7.7% sodium borate, 1% sodium saccharin, 9% glucose, 1% sodium alginate (Kelgin HV), 0.1 Kathon CG, and the remainder, water.

Formula 6 contained 92.05% fructose, 7.7% sodium borate, and 0.25% formaldehyde.

Formula 7 contained 7.7% sodium borate. 75.3% glucose (Casco 1632), and the remainder, water.

The consumption rates shown in Table 6 demonstrate that the compositions containing sodium saccharin (formulas 1-5) were preferred as exhibited by Pharaoh ant feeding preference tests over those not containing sodium saccharin (formulas 6-7). These results also demonstrate that Pharaoh ants actively feed on compositions containing FICAM$_{TM}$ and sodium saccharin (formula 2) with no apparent repellency response exhibited by the insecticide, FICAM$_{TM}$.

## EXAMPLE 7

The mortality rates of various insect bait compositions as exhibited by Pharaoh ants were evaluated as follows: 50 Pharaoh worker ants were placed in plastic Teflon containers, along with the following food sources - water, flies ( a protein source), honey water and the bait composition described below. The test allowed worker ants to choose between a regular food source containing flies and honey water and the bait compositions of the invention. The mortality rates were observed after 7 days and after 9 days as shown in Table 7. The values in parentheses in the mortality rate column of Table 7 are those recorded after 9 days. Both observations were based on only one bait application.

### TABLE 7

| Formulation[1] | Mortality Rate[2] |
|---|---|
| 1 | 75 (84) |
| 2 | 42 (59) |
| 3 | 40 (50) |
| 4 | 19 (19) |
| 5 | 10 (19) |

[1] The formula of each composition is described below.
[2] The average of 4 replicate tests.

Formula 1 contained 7.7% sodium borate, 1% sodium saccharin, 1% hydroxyethyl cellulose (Natrosol 250HR), 9% fructose (Corn Sweet 90), 0.1% Kathon CG and the remainder, water.

Formula 2 was a liquid bait and contained 92.05% fructose, 7.7, sodium borate, and 0.25% formaldehyde.

Formula 3 contained 10% sucrose, 6% pregelatinized starch, 5% boric acid, and the remainder, water, and was offered without the use of a container.

Formula 4 was the same composition as formula 3 except with a container.

Formula 5 was a control and contained only flies and honey water. The control was intended to show the natural mortality rate of the Pharaoh ants.

The results clearly show that the use of the non-caloric sweeteners of the invention enhance the mortality rate of Pharaoh worker ants when compared to caloric sweeteners in toxic insect baits.

## Claims

1. An insect bait composition characterized by (a) an insecticide present in effective amounts; (b) a non-caloric sweetener in amounts sufficient to attract insect; and (c) an aqueous carrier in amounts sufficient to bind the composition and to permit ready insect ingestion.

2. The composition according to claim 1, characterized in that the insecticide, preferably selected from the group consisting of bendiocarb, a borate salt, boric acid, a pyrethroid, pyrethrum, chorpyrifos, and mixtures thereof, is present in an amount from about 0.001% to about 10%, based on the total weight of the insect bait composition.

3. The composition according to claim 1 or 2, characterized in that the insecticide is bendiocarb and is present in an amount from about 0.01% to about 1%, based on the total weight of the insect bait composition.

4. The composition according to claim 1 or 2, characterized in that the insecticide is a borate salt or boric acid and is present in amount from about 0.01% to about 10%, based on the total weight of the insect bait composition.

5. The composition according to any of claims 1 to 4, characterized in that the non-caloric sweetener, preferably selected from sodium saccharin and cyclamate, is present in an amount from about 0.01% to about 10%, preferably from about 0.1% to 2%, based on the total weight of the insect bait composition.

6. The composition according to claim 5, characterized in that the non-caloric sweetener is cyclamate, preferably present in an amount from about 0.5% to about 2% based upon the total weight of the insect bait.

7. The composition according to any of claims 1 to 6, characterized in that the aqueous carrier is water, preferably in an amount from about 80% to about 99.99% based upon the total weight of the insect bait composition.

8. The composition according to any of claims 1 to 7, characterized in that the aqueous carrier comprises a thickener or gelling ingredient, preferably selected from sodium alginate and hydroxyethyl cellulose, and preferably present in amounts from about 0.01% to 10%, based upon the total weight of the insect bait composition and water.

9. The composition according to any of claims 1 to 8, characterized by further comprising at least one amino acid, preferably selected from the group consisting of L-proline, leucine, L-phenylalanine, aspartic acid, aspartame, and mixtures thereof, and preferably present in an amount from about 0.001% to about 2% based upon the total weight of the insect bait composition.

10. The composition according to any of claims 1 to 9, characterized in that the composition includes a caloric sweetener, preferably selected from the group consisting of fructose, sucrose, dextrose, honey, and mixtures thereof, and preferably present in an amount from about 0.1% to about 10%, based upon the total weight of the insect bait composition.

11. The composition according to any of claims 1 to 10, characterized by comprising (a) from about 0.001% to about 10% insecticide, based on the total weight of the insect bait composition; (b) from about 0.01% to about 10% non-caloric sweetener, based on the total weight of the insect bait composition; and (c) from about 80% to about 99.99% water, based on the total weight of the insect bait composition.